# EUROPÄISCHE PATENTSCHRIFT

(11) **EP 1 570 973 B1**
(45) Veröffentlichungstag und Bekanntmachung des Hinweises auf die Patenterteilung: **27.09.2006**
(21) Anmeldenummer: 04005399.3
(22) Anmeldetag: 06.03.2004
(51) Int. Cl.: B29C 53/80, B29K 105/08, B29K 67/00, B29K 507/04, B29K 509/08

(54) **Vorrichtung und Verfahren zum Aufwickeln zumindest einer Faser**
Apparatus and method for winding at least a fiber
Appareil et méthode pour enrouler au moins une fibre

(43) Veröffentlichungstag der Anmeldung: 07.09.2005
(73) Patentinhaber: EHA Spezialmaschinenbau GmbH, 35239 Steffenberg (DE)
(72) Erfinder: Neubert, Mike, 35232 Dautphetal (DE); Weg, Johannes, 35685 Dillenburg (DE)
(74) Vertreter: Rohmann, Michael

(56) Entgegenhaltungen:
- EP-A- 0 491 354
- DE-A- 3 109 365
- FR-A- 1 359 169
- US-A- 3 707 415

## Beschreibung

Die Erfindung betrifft eine Vorrichtung zum Aufwickeln zumindest einer Faser, insbesondere eines Faserstranges auf einen Formträger. Die Erfindung betrifft weiterhin ein Verfahren zum Aufwickeln zumindest einer Faser, insbesondere eines Faserstranges auf einen Formträger.

Aus EP 0 491 354 A1 ist eine Vorrichtung zum Aufwickeln einer Faser, insbesondere eines Faserstranges, auf einen Formträger bekannt, wobei auch eine Trennvorrichtung vorgesehen ist. Dem Formträger ist ein Zuführkopf zugeordnet, wobei der zugeführte Faserstrang diesen Zuführkopf ständig durchläuft. Der Zuführkopf weist einen Trennabschnitt und einen so genannten Adding-Mechanismus auf. Diese beiden Komponenten des Zuführkopfes werden in jedem Betriebszustand der Vorrichtung von dem Faserstrang durchlaufen. Diese bekannte Vorrichtung lässt im Hinblick auf eine funktionssichere kontinuierliche Verfahrensweise zu wünschen übrig.

Aus der Praxis ist es fernerhin bekannt, einen Faserstrang mit einem Harz zu imprägnieren und danach den imprägnierten Faserstrang auf einem Formträger aufzuwickeln. Bei dem Formträger handelt es sich insbesondere um einen zylinderförmigen Hohlkörper, beispielsweise einen blasgeformten Kunststoffbehälter. Das für die Imprägnierung eingesetzte Harz lässt man aushärten und das resultierende Endprodukt kann beispielsweise als Tank für Flüssigkeiten oder dergleichen eingesetzt werden. Wenn bei diesen bekannten Vorrichtungen bzw. Verfahren der Wickelvorgang an einem Formträger beendet werden soll, wird der Faserstrang manuell abgeschnitten und anschließend manuell an einem weiteren Formträger angebunden. Es versteht sich, dass diese Vorgehensweise aufwändig ist und außerdem muss der Wickelvorgang immer wieder unterbrochen werden, so dass eine kontinuierliche Verfahrensweise nicht möglich ist.

Aus der Praxis ist aber auch ein mehr oder weniger automatisiertes Verfahren bekannt. Nach Beendigung des Wickelvorganges an einem Formträger wird der Faserstrang anschließend auf eine Hülse aufgewickelt und dort abgeschnitten. Nach Entfernung des fertig bewickelten Formträgers wird ein weiterer Formträger eingesetzt. Daraufhin wird dann der Faserstrang von der Hülse auf diesen weiteren Formträger gewickelt. Diese Verfahrensweise lässt aber im Hinblick auf die Funktionssicherheit und Präzision zu wünschen übrig. Im Übrigen ist das Anwickeln bei dieser Verfahrensweise lediglich am axialen Ende des Formträgers möglich und insoweit sind einer flexiblen Arbeitsweise Grenzen gesetzt.

Demgegenüber liegt der Erfindung das technische Problem zugrunde, eine Vorrichtung der eingangs genannten Art anzugeben, mit der eine automatische und kontinuierliche Arbeitsweise bei geringem Aufwand und hoher Funktionssicherheit möglich ist. Der Erfindung liegt weiterhin das technische Problem zugrunde, ein entsprechendes Verfahren anzugeben.

Zur Lösung dieses technischen Problems lehrt die Erfindung eine Vorrichtung zum Aufwickeln zumindest einer Faser, insbesondere eines Faserstranges auf einen Formträger,
wobei eine Trennvorrichtung mit einer Schneideinrichtung und einer Klemmeinrichtung vorgesehen ist,
wobei bei Beendigung eines Wickelvorganges an einem fertig bewickelten ersten Formträger der Faserstrang mit der Schneideinrichtung trennbar und mit einer Klemmeinrichtung an der Trennvorrichtung fixierbar ist,
wobei die Trennvorrichtung zum Heranführen des an der Trennvorrichtung fixierten Faserstrangendes an einem zu bewickelnden zweiten Formträger zu Beginn eines neuen Wickelvorganges vorgesehen ist,
wobei die Trennvorrichtung während eines Wickelvorganges aus dem Wickelbereich am Formträger ausschwenkbar und am Ende eines Wickelvorganges in den Wickelbereich einschwenkbar ist und
wobei in Zuführrichtung vor der Trennvorrichtung zumindest ein Fadenspeicher für die Zwischenspeicherung eines Faserstrangabschnittes zwischen Beendigung eines Wickelvorganges und dem Beginn eines neuen Wickelvorganges angeordnet ist.

Es liegt im Rahmen der Erfindung, dass ein Faserstrang auf einen Formträger aufgewickelt wird, der aus einer Vielzahl von Fasern bzw. Filamenten besteht. Die Fasern bzw. Filamente sind in dem Faserstrang in Form von Bündeln oder Flachbändem angeordnet. Bei den Fasern kann es sich um Glasfasern, Kohlefasem, Aramidfasern oder auch um Kunststofffasern, beispielsweise Polyesterfasern handeln. Der Faserstrang wird zweckmäßigerweise von einer Spule abgewickelt und dann durch die Imprägniereinrichtung geführt.

Bei dem Formträger kann es sich zum einen um einen so genannten Liner handeln, das heißt um einen Formträger, der im Produkt verbleibt bzw. Bestandteil des Produktes wird. Bei dem Formträger kann es sich zum anderen aber auch um einen Dom handeln, der nach einem Wickelvorgang bzw. nach dem Härten des Harzes aus dem Produkt herausgezogen wird und für weitere Wickelvorgänge wieder zur Verfügung steht. Es liegt im Rahmen der Erfindung, dass ein Formträger während eines Wickelvorganges rotierend angetrieben wird.

Gemäß einer ersten Ausführungsform ist zumindest eine Imprägniereinrichtung zum Imprägnieren des Faserstranges mit einem Harz vorhanden. Zweckmäßigerweise ist die Imprägniereinrichtung in Zuführungsrichtung vor dem Fadenspeicher angeordnet. Zuführungsrichtung meint hier und nachfolgend die Richtung, in die der Faserstrang transportiert wird. In der Imprägniereinrichtung findet ein Imprägnieren bzw. ein Tränken des Faserstranges mit einer Harzmatrix statt. Bei dem Harz bzw. Kunstharz kann es sich um ein duroplastisches Harz oder um einen thermoplastischen Kunststoff handeln. - Nach einer zweiten Ausführungsform wird dem Fadenspeicher und dem Formträger eine vorimprägnierte Faser bzw. ein vorimprägnierter Faserstrang zugeführt. Solche vorimprägnierten Fasern werden auch als Prepregs bezeichnet. Bei dieser zweiten Ausführungsform der erfindungsgemäßen Vorrichtung ist eine Imprägniereinrichtung also nicht erforderlich.

Erfindungsgemäß weist die Trennvorrichtung eine Klemmeinrichtung zur Fixierung bzw. zum Einklemmen des Faserstranges und außerdem eine Schneideinrichtung zum Durchtrennen des Faserstranges auf. Die Klemmeinrichtung ist zweckmäßigerweise mit zwei gegeneinander wirkenden Klemmbacken ausgestattet, zwischen denen der Faserstrang eingeklemmt werden kann. Die Schneideinrichtung weist vorzugsweise zumindest ein Schneidmesser auf. Die Schneideinrichtung bzw. das Schneidmesser ist bevorzugt in Zuführungsrichtung hinter der Klemmeinrichtung angeordnet. Die aus Klemmeinrichtung und Schneideinrichtung bestehende Trennvorrichtung befindet sich nach bevorzugter Ausführungsform lediglich während der Beendigung eines Wickelvorganges und zu Beginn eines neuen Wickelvorganges im Wickelbereich bzw. im Bereich des jeweiligen Formträgers und kann ansonsten aus dem Wickelbereich ausgeschwenkt werden.

Wenn der Faserstrang bei Beendigung eines Wickelvorganges mit Hilfe der Schneideinrichtung durchtrennt wird, verbleibt ein Restende an dem bereits auf dem Formträger aufgewickelten Faserstrang. Nach besonders bevorzugter Ausführungsform der Erfindung ist eine Anstreifeinrichtung vorgesehen, mit der dieses Restende des Faserstranges an dem fertig gewickelten Formträger angestreift wird bzw. angedrückt wird. Das Restende wird zweckmäßigerweise unmittelbar nach dem Schneiden / Trennen an dem Formträger angestreift. Die Anstreifeinrichtung ist bevorzugt in Form einer elastischen Lippe ausgeführt. Diese elastische Lippe drückt das Restende des Faserstranges beim Weiterrotieren des fertig bewickelten Formträgers automatisch an diesen Formträger an. Diese elastische Lippe befindet sich also beim Anstreifen dicht bzw. unmittelbar über dem fertig bewickelten Formträger.

Anschließend wird der fertig bewickelte erste Formträger entfernt und ein neu zu bewickelnder zweiter Formträger wird in den Wickelbereich eingebracht. Es liegt im Rahmen der Erfindung, dass dann das festgehaltene Faserstrangende mit der Trennvorrichtung bzw. mit der Klemmeinrichtung an den neu zu bewickelnden zweiten Formträger geführt wird, so dass das in der Klemmeinrichtung fixierte Faserstrangende den neu zu bewickelnden zweiten Formträger berührt. Im Anschluss daran öffnet die Trennvorrichtung bzw. Klemmeinrichtung und das Faserstrangende wird losgelassen und liegt an dem zweiten Formträger an. Mit anderen Worten öffnen also die Klemmbacken der Klemmeinrichtung, so dass das Faserstrangende nur noch mit dem neu zu bewickelnden zweiten Formträger in Kontakt steht.

Nach sehr bevorzugter Ausführungsform der Erfindung ist an der Trennvorrichtung eine zweite Anstreifeinrichtung vorgesehen, mit der das Faserstrangende nach dem Lösen aus der Trennvorrichtung bzw. Klemmeinrichtung an dem neu zu bewickelnden zweiten Formträger andrückbar ist. Das Faserstrangende wird also vorzugsweise nach dem Öffnen der Klemmbacken der Klemmeinrichtung und aufliegend auf dem zweiten Formträger an diesen zweiten Formträger angestreift bzw. angedrückt. Auch die zweite Anstreifeinrichtung ist zweckmäßigerweise als elastische Lippe ausgebildet, die das Faserstrangende an den zweiten Formträger andrückt. Es liegt im Rahmen der Erfindung, dass diese elastische Lippe unmittelbar über dem zweiten Formträger angeordnet ist, wenn sich die Trennvorrichtung im Wickelbereich bzw. im Bereich des Formträgers befindet.

Nach besonders bevorzugter Ausführungsform der Erfindung weist der Fadenspeicher zumindest zwei Umlenkrollen für den Faserstrang auf und durch Vergrößerung des Abstandes zwischen diesen beiden Umlenkrollen ist ein zu der Abstandsvergrößerung Δa proportionaler Faserstrangabschnitt zwischenspeicherbar. Vorzugsweise wird eine Umlenkrolle relativ zu der zweiten Umlenkrolle verschoben bzw. von der zweiten Umlenkrolle entfernt. Dabei nimmt die erste Umlenkrolle den sie umschlingenden Faserstrang gleichsam mit, so dass der Faserstrangabschnitt zwischen erster und zweiter Umlenkrolle zwischengespeichert wird.

Zur Lösung des oben dargelegten technischen Problems lehrt die Erfindung weiterhin ein Verfahren zum Aufwickeln zumindest einer Faser, insbesondere eines Faserstranges auf einen Formträger,
wobei der kontinuierlich zugeführte Faserstrang mit einem Harz imprägniert wird und wobei der imprägnierte Faserstrang auf einem rotierend angetriebenen ersten Formträger aufgewickelt wird,
wobei im Zuge der Beendigung des Wickelvorganges eine Trennvorrichtung in den Wickelbereich eingeschwenkt und der Faserstrang an dem ersten Formträger festgehalten und durchtrennt wird,
wobei während des Festhaltens des Faserstranges ein Faserstrangabschnitt des weiterhin kontinuierlich zugeführten Faserstranges in einem Fadenspeicher zwischengespeichert wird,
wobei das festgehaltene Faserstrangende zum Anwickeln an den neu zu bewickelnden rotierend angetriebenen zweiten Formträger gelöst wird,
wobei daraufhin der zwischengespeicherte Faserstrangabschnitt unter einer ersten geringeren Fadenspannung an den zweiten Formträger angewickelt wird
und wobei anschließend der kontinuierlich zugeführte Faserstrang unter einer zweiten höheren Fadenspannung an dem zweiten Formträger aufgewickelt wird und so weiter fort.

Dass der Faserstrang mit einem Harz imprägniert wird meint nach einer Ausführungsform der Erfindung, dass der Faserstrang online, das heißt in einer dem Fadenspeicher bzw. dem Formträger vorgeschalteten lmprägniereinrichtung imprägniert wird. Der Faserstrang kann im Rahmen des erfindungsgemäßen Verfahrens aber auch offline imprägniert werden, das heißt als vorimprägnierter Faserstrang eingesetzt werden. Festhalten meint im Rahmen der Erfindung insbesondere ein Einklemmen des Faserstranges bzw. des Faserstrangendes zwischen den Klemmbacken einer Klemmeinrichtung. Dieses festgehaltene Faserstrangende wird also nicht mehr weiter bewegt bzw. nicht mehr weiter gefördert. Aufgrund der erfindungsgemäßen Zwischenspeicherung eines Fadenstrangabschnittes kann aber nichtsdestoweniger der Faserstrang dem Fadenspeicher weiterhin kontinuierlich zugeführt werden. Nach dem Lösen bzw. Loslassen des Faserstrangendes wird der Faserstrang dann an dem neu zu bewickelnden zweiten Formträger zunächst angewickelt. Dazu wird dieser zweite Formträger mit dem anliegenden gelösten Faserstrangende entgegen der Aufwickelrichtung, also in Abwickelrichtung des Formträgers, gedreht. Dabei wird das Faserstrangende dann vorzugsweise mit der zweiten Anstreifeinrichtung der Trennvorrichtung an dem zweiten Formträger angedrückt. Bei der Rotation in Abwickelrichtung vollzieht der Formträger bevorzugt lediglich eine Teilumdrehung, beispielsweise eine Viertelumdrehung. Anschließend wechselt der Formträger die Drehrichtung und wird in Aufwickelrichtung gedreht. Dann findet das Anwickeln des Faserstranges mit der ersten geringeren Fadenspannung an dem zweiten Formträger statt. Der Fadenspeicher erlaubt die Bevorratung eines genügend langen Faserstrangabschnittes, um mit geringer bzw. schwacher Fadenspannung anwickeln zu können. Im Zuge des Anwickelns mit der ersten geringeren Fadenspannung vollzieht der Formkörper zweckmäßigerweise eine halbe Umdrehung bis vier Umdrehungen, bevorzugt eine halbe Umdrehung bis zwei Umdrehungen. Fadenspannung meint die Spannung bzw. Vorspannung, mit der der Faserstrang auf dem Formträger aufläuft. Nach dem Anwickeln wird dann unter der zweiten höheren Fadenspannung an dem Formträger aufgewickelt. Diese zweite höhere Fadenspannung ist in der Regel mit einer im Vergleich zum Anwickeln höheren Rotationsgeschwindigkeit des Formträgers verbunden.

Der Erfindung liegt die Erkenntnis zugrunde, dass aufgrund der erfindungsgemäßen Ausgestaltung der Vorrichtung bzw. aufgrund der erfindungsgemäßen Verfahrensweise ein sehr einfaches und funktionssicheres Aufwickeln eines Faserstranges auf Formträgern möglich ist und dass dabei insbesondere kontinuierlich gearbeitet werden kann. Unterbrechungen des Aufwickelvorganges sind also grundsätzlich nicht erforderlich. Von besonderer Bedeutung ist auch, dass mit der erfindungsgemäßen Vorrichtung bzw. mit dem erfindungsgemäßen Verfahren sehr präzise aufgewickelt werden kann. Die Wickelgeschwindigkeit des erfindungsgemäßen Verfahrens ist wesentlich höher als die Wickelgeschwindigkeit bei den aus dem Stand der Technik bekannten vergleichbaren Wickelverfahren. Hervorzuheben ist auch, dass diese Vorteile mit relativ geringem Aufwand erzielt werden.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf eine erfindungsgemäße Vorrichtung,
- Fig. 2: den Gegenstand nach Fig. 1 in einer anderen Funktionsstellung,
- Fig. 3: eine Seitenansicht des Gegenstandes nach Fig. 2,
- Fig. 4: eine perspektivische Ansicht des Gegenstandes gemäß Fig. 3,
- Fig. 5: den Gegenstand nach Fig. 4 ausschnittsweise in einer anderen Funktionsstellung,
- Fig. 6: einen erfindungsgemäßen Fadenspeicher in einer Seitenansicht und
- Fig. 7: den Gegenstand nach Fig. 5 in einer weiteren Funktionsstellung.

Die Figuren zeigen eine Vorrichtung zum Aufwickeln eines Faserstranges 1 auf einen Formträger 2. Bei dem Faserstrang 1 handelt es sich vorzugsweise und im Ausführungsbeispiel um ein Flachband aus einer Mehrzahl von Fasern. Der Faserstrang 1 wird zunächst durch eine in den Figuren nicht dargestellte Imprägniereinrichtung geführt, in der er mit einem Kunstharz imprägniert bzw. getränkt wird. Der mit dem Kunstharz getränkte Faserstrang wird dann auf dem Formträger 2 aufgewickelt. Im Ausführungsbeispiel handelt es sich bei dem Formträger 2 um einen rotierend angetriebenen Wickeldorn, der nach Beendigung eines Wickelvorganges und nach dem Aushärten des Kunstharzes aus dem Produkt herausgezogen wird und für einen späteren Wickelvorgang wieder zur Verfügung steht.

Die Figuren zeigen eine Trennvorrichtung 3 zur Fixierung und Trennung des Faserstranges 1 bei Beendigung eines Wickelvorganges an einem fertig bewickelten ersten Formträger 2 und zum Heranführen des fixierten Faserstrangendes 4 an einen neu zu bewickelnden zweiten Formträger 2' zu Beginn eines neuen Wickelvorganges.

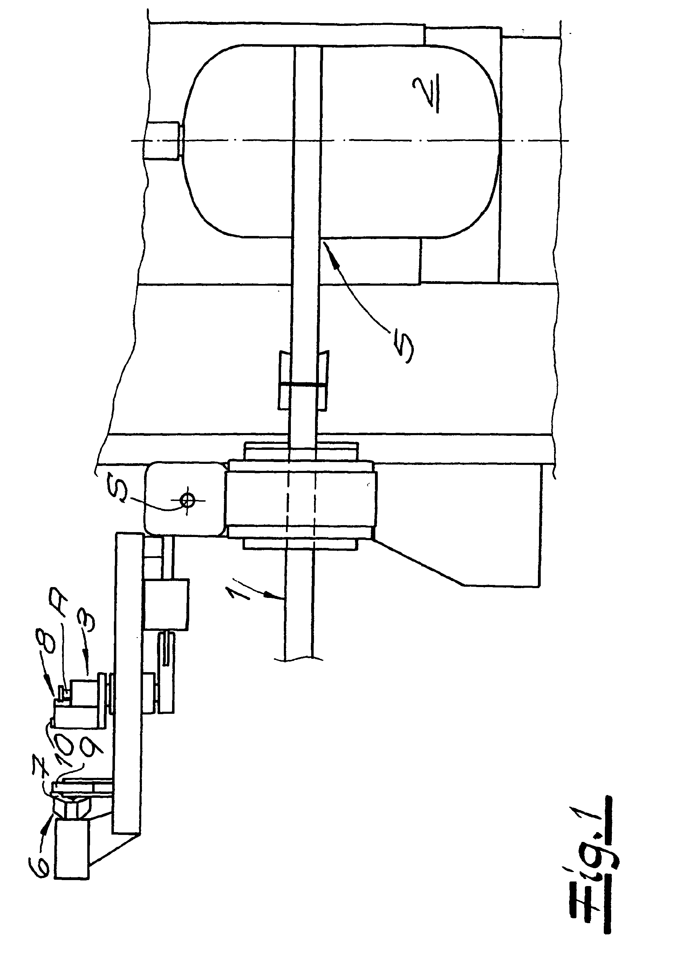

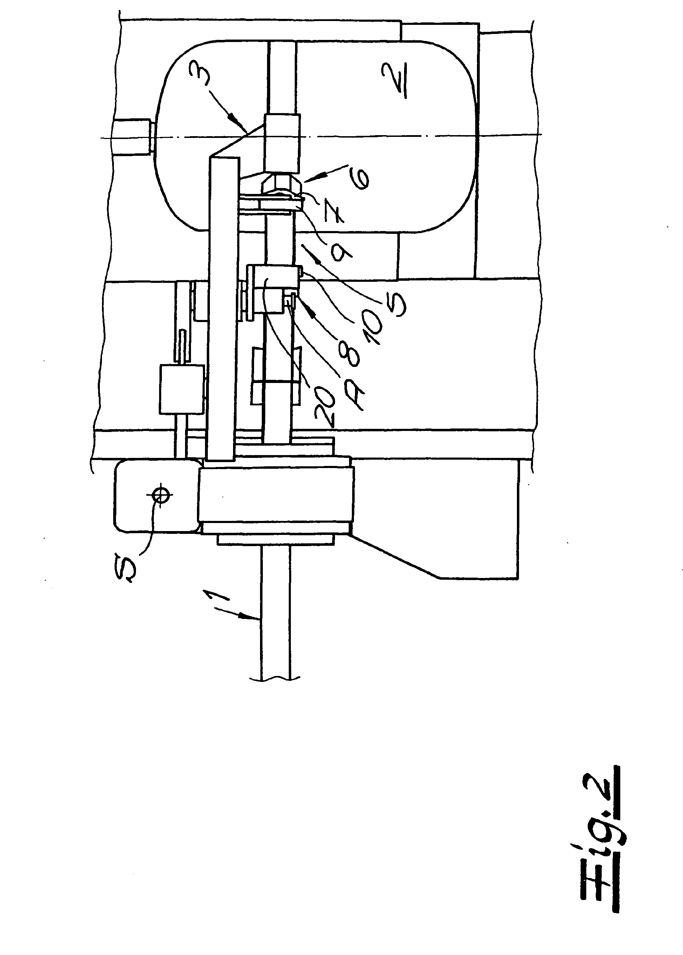

Fig. 1 zeigt den Funktionszustand, in dem der Aufwickelvorgang in vollem Gange ist. In diesem Funktionszustand ist die Trennvorrichtung 3 aus dem Wickelbereich 5 am Formträger 2 ausgeschwenkt. Die Trennvorrichtung 3 ist dazu um die Schwenkachse S schwenkbar. Am Ende eines Wickelvorganges wird die Trennvorrichtung 3 in den Wickelbereich 5 eingeschwenkt. Dieser Funktionszustand ist in den Fig. 2 bis 5 und 7 dargestellt.

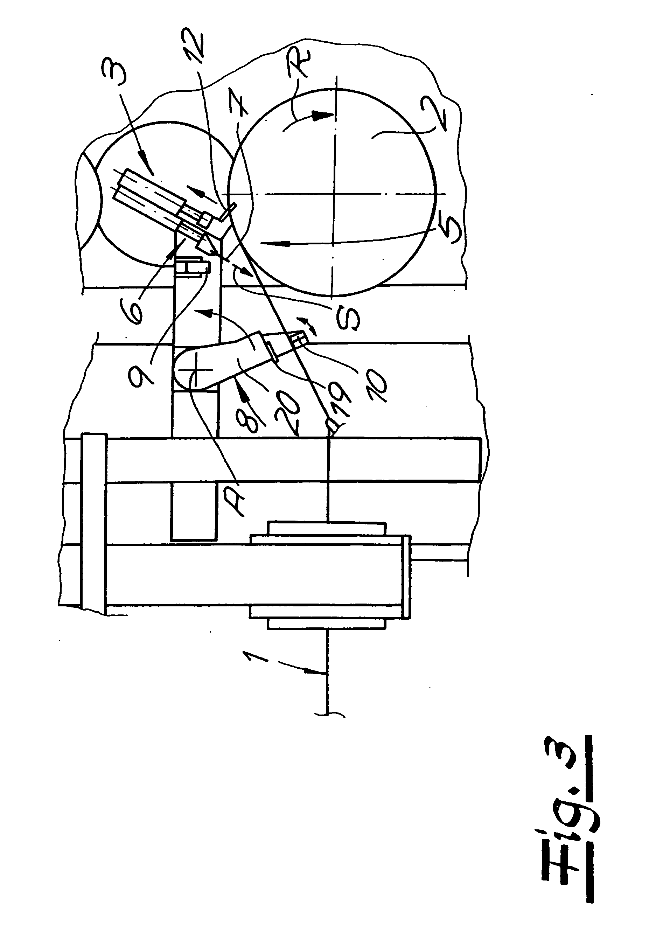

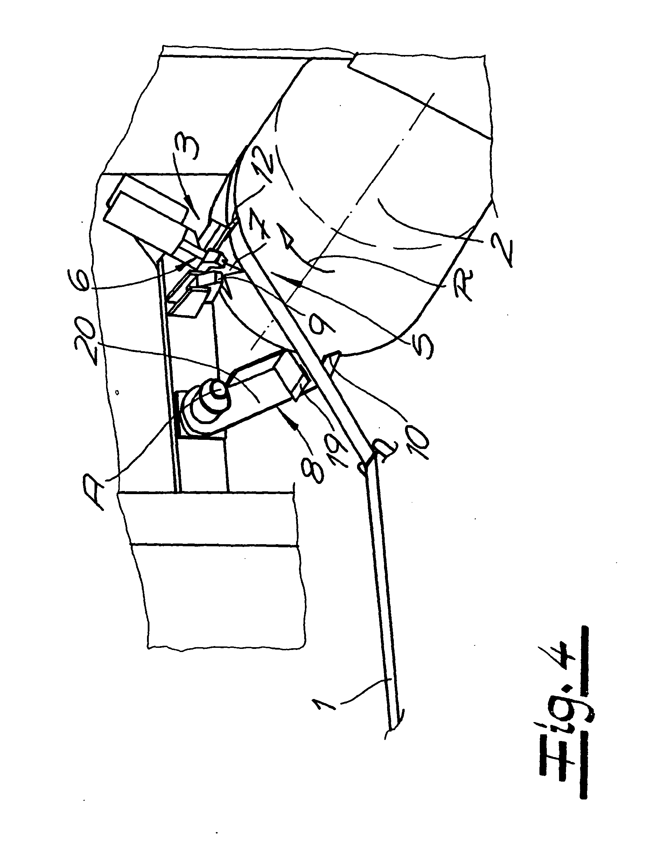

Beispielsweise in den Fig. 3 und 4 ist erkennbar, dass die Trennvorrichtung 3 eine Schneideinrichtung 6 zum Durchtrennen des Faserstranges 1 aufweist.

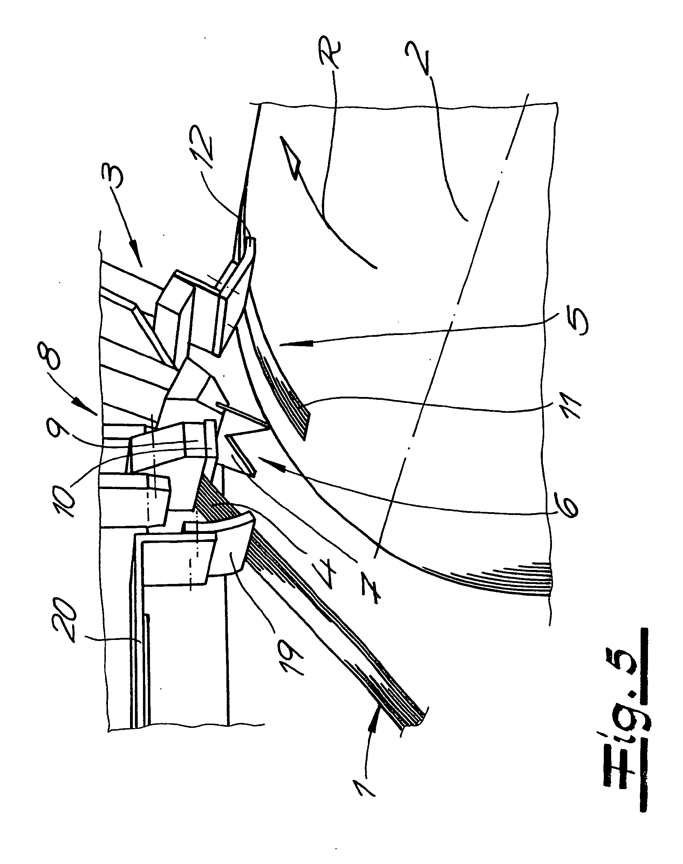

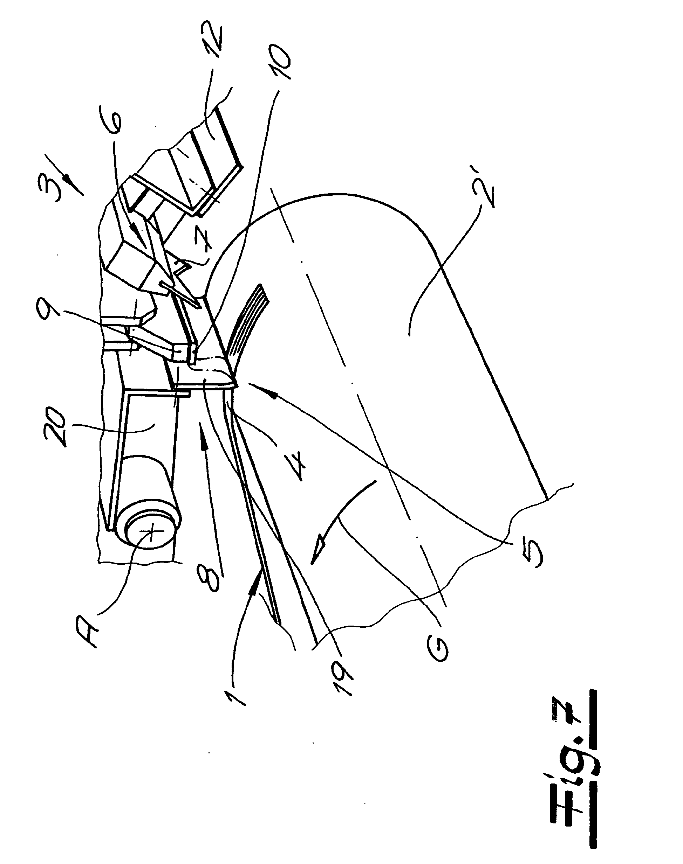

Hierzu ist ein in Richtung des Pfeiles s ausfahrbares Schneidmesser 7 in der Schneideinrichtung 6 vorgesehen. Die Trennvorrichtung weist weiterhin eine Klemmeinrichtung 8 mit zusammen- bzw. auseinanderfahrbaren Klemmbacken 9, 10 auf. Bei Beendigung des Wickelvorganges an dem ersten Formträger 2 werden die Klemmbacken 9, 10 unter Zwischenschaltung des Faserstranges 1 bzw. des Faserstrangendes 4 zusammengefahren, so dass der Faserstrang 1 bzw. das Faserstrangende 4 zwischen den Klemmbacken eingeklemmt bzw. festgehalten wird. Dieser Funktionszustand ist in den Fig. 5 und 7 dargestellt. Nach dem Einklemmen des Faserstranges 1 zwischen den Klemmbacken 9, 10, wird der Faserstrang 1 mit Hilfe des Schneidmessers 7 durchtrennt (Fig. 5). Aufgrund des in Richtung des Pfeiles R weiter rotierenden Formträgers 2 wird das Restende 11 des Faserstranges 1 mit einer ersten, als elastische Lippe 12 ausgebildeten Anstreifeinrichtung an dem fertig bewickelten Formträger 2 angestreift bzw. angedrückt. Die als elastische Lippe 12 ausgeführte erste Anstreifeinrichtung ist im Ausführungsbeispiel an der Trennvorrichtung 3 angebracht und befindet sich unmittelbar bzw. dicht über dem Formträger 2.

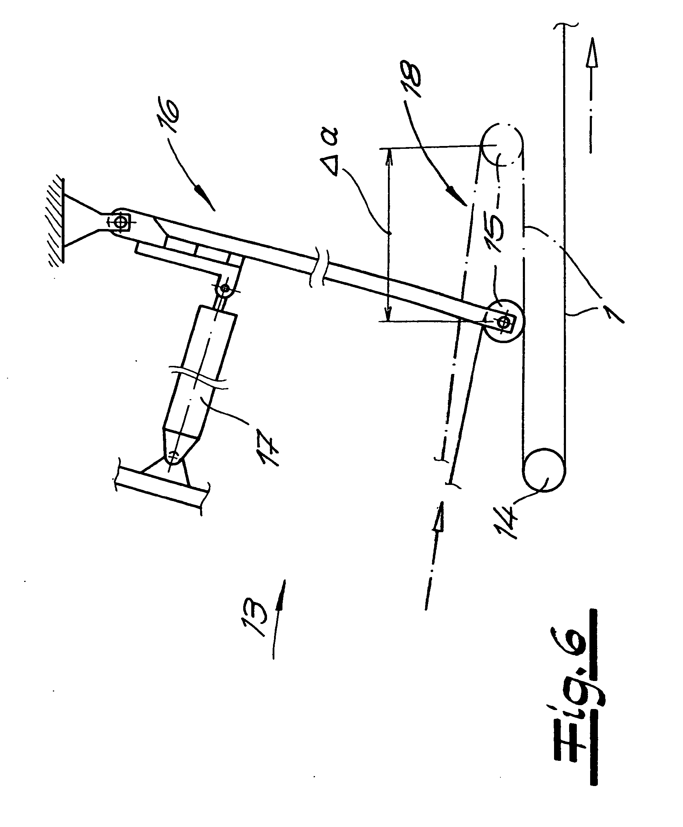

Während das Faserstrangende 4 von der Klemmeinrichtung 8 festgehalten wird, findet natürlich keine kontinuierliche Weiterförderung des Faserstranges 1 auf den Formträger 2 statt. Allerdings wird der Faserstrang 1 nach wie vor kontinuierlich dem Fadenspeicher 13 zugeführt. Der Fadenspeicher 13 ist in den Fig. 1 bis 3 lediglich ganz schematisch angedeutet worden. Dieser Fadenspeicher 13 ist zweckmäßigerweise der nicht dargestellten Imprägniereinrichtung nachgeschaltet und dem Formträger 2 bzw. der Trennvorrichtung 3 vorgeschaltet. In der Fig. 6 wird der Fadenspeicher 13 detaillierter dargestellt. Die Förderrichtung des Faserstranges 1 ist hier durch strichpunktierte Pfeile verdeutlicht worden. Der Fadenspeicher 13 weist zunächst eine erste Umlenkrolle 14 sowie eine zweite Umlenkrolle 15 auf, über welche Umlenkrollen 14, 15 der Faserstrang 1 geführt wird. Die zweite Umlenkrolle 15 ist an eine Hebeleinrichtung 16 angeschlossen, auf die mit einer Zylinderanordnung 17 eingewirkt werden kann. Durch Einwirkung der Zylinderanordnung 17 auf die Hebeleinrichtung 16 kann die zweite Umlenkrolle 15 relativ zur ersten Umlenkrolle 14 verschoben werden, so dass der Abstand zwischen erster Umlenkrolle 14 und zweiter Umlenkrolle 15 um die Abstandsvergrößerung Δa wächst. Wenn nun der Faserstrang 1 bzw. das Faserstrangende 4 von der Klemmeinrichtung 8 festgehalten bzw. eingeklemmt wird, kann der Faserstrang 1 nichtsdestoweniger dem Fadenspeicher 13 nach wie vor kontinuierlich zugeführt werden, wenn dabei die zweite Umlenkrolle 15 um die Abstandsvergrößerung Δa verschoben wird. Auf diese Weise ist ein zur Abstandsvergrößerung Δa proportionaler Faserstrangabschnitt 18 in dem Fadenspeicher 13 zwischenspeicherbar. Mit anderen Worten kann der Faserstrang 1 dem Fadenspeicher 13 kontinuierlich zugeführt werden, obwohl das Faserstrangende 4 von der Klemmeinrichtung 8 eingeklemmt bzw. festgehalten wird.

In der Fig. 7 ist der Funktionszustand dargestellt, in dem der bereits fertig bewickelte erste Formträger 2 entfernt worden ist und bereits ein neu zu bewickelnder zweiter Formträger 2' in den Wickelbereich 5 eingeführt wurde. Außerdem ist hier die Trennvorrichtung 3 so an den Formträger 2' herangefahren worden, dass das Faserstrangende 4 den zweiten Formträger 2' berührt. Im Anschluss an die in Fig. 7 dargestellte Funktionsstellung öffnen die Klemmbacken 9, 10 der Klemmeinrichtung 8, so dass das Faserstrangende 4 von der Klemmeinrichtung 8 gleichsam losgelassen wird. Im Anschluss daran rotiert dann der zweite Formträger 2' in Richtung des Pfeiles G entgegen der Aufwickelrichtung. Dadurch wird das Faserstrangende von der als elastische Lippe 19 ausgebildeten zweiten Anstreifeinrichtung an dem Formträger 2' angestreift bzw. angedrückt. Auch die als elastische Lippe 19 ausgebildete zweite Anstreifeinrichtung ist Bestandteil der Trennvorrichtung 3. Die elastische Lippe 19 ist hier an einem Schwenkarm 20 angeordnet, der an seinem Ende die zweite bzw. untere Klemmbacke 10 aufweist. Der Schwenkarm 20 ist insbesondere in den Fig. 3 und 4 dargestellt und ist um die Achse A verschwenkbar bzw. zu der oberen Klemmbacke 9 hinschwenkbar.

Im Anschluss an das vorstehend beschriebene Anstreifen des Faserstrangendes 4 an dem neuen Formträger 2' findet dann das Anwickeln statt und dabei rotiert der Formträger 2' wieder in Aufwickelrichtung. Der im Fadenspeicher 13 zwischengespeicherte Faserstrangabschnitt 18 wird jetzt unter einer ersten geringeren Fadenspannung an den zweiten Formträger 2' angewickelt. Dazu wird die zweite Umlenkrolle 15 des Fadenspeichers 13 mit Hilfe der Hebeleinrichtung 16 bzw. der Zylinderanordnung 17 wieder in ihre Ausgangsposition (in Fig. 6 ausgezogen gezeichnet) zurückgefahren. Im Zuge dieses Anwickelns mit geringerer Fadenspannung vollzieht der Formträger 2' beispielsweise eine halbe Umdrehung bis zwei Umdrehungen. Im Anschluss daran findet dann wiederum das Aufwickeln des Faserstranges 1 statt, und zwar unter einer zweiten, im Vergleich zum Anwickelvorgang höheren, Fadenspannung. Dann kann die Trennvorrichtung 3 wieder in die in der Fig. 1 dargestellte Position ausgeschwenkt werden. Bei Beendigung des Wickelvorganges auf den zweiten Formträger 2' wird die Trennvorrichtung 3 dann wieder in den Wickelbereich 5 eingeschwenkt (Fig. 2) und dann beginnt der vorstehend beschriebene Verfahrensschrittablauf von vorne.

## Patentansprüche

1. Vorrichtung zum Aufwickeln zumindest einer Faser, insbesondere eines Faserstranges (1) auf einen Formträger (2),
wobei eine Trennvorrichtung (3) mit einer Schneideeinrichtung (6) und einer Klemmeinrichtung (8) vorgesehen ist,
wobei bei Beendigung eines Wickelvorganges an einem fertig bewickelten ersten Formträger (2) der Faserstrang (1) mit der Schneideeinrichtung (6) trennbar und mit einer Klemmeinrichtung (8) an der Trennvorrichtung (3) fixierbar ist,
wobei die Trennvorrichtung (3) zum Heranführen des an der Trennvorrichtung (3) fixierten Faserstrangendes (4) an einen zu bewickelnden zweiten Formträger (2') zu Beginn eines neuen Wickelvorganges vorgesehen ist,
wobei die Trennvorrichtung (3) während eines Wickelvorganges aus dem Wickelbereich (5) am Formträger (2) ausschwenkbar und am Ende eines Wickelvorganges in den Wickelbereich (5) einschwenkbar ist und
wobei in Zuführrichtung vor der Trennvorrichtung (3) zumindest ein Fadenspeicher (13) für die Zwischenspeicherung eines Faserstrangabschnittes (18) zwischen Beendigung eines Wickelvorganges und dem Beginn eines neuen Wickelvorganges angeordnet ist.

2. Vorrichtung nach Anspruch 1, wobei zumindest eine Imprägniereinrichtung zum Imprägnieren des Faserstranges (1) mit einem Harz vorhanden ist,
wobei die Imprägniereinrichtung vorzugsweise in Zuführungsrichtung vor dem Fadenspeicher (13) angeordnet ist.

3. Vorrichtung nach Anspruch 1 oder 2, wobei eine Anstreifeinrichtung vorgesehen ist, mit der das Restende (11) des Faserstranges (1) an dem fertig bewickelten Formträger (2) anstreifbar ist.

4. Vorrichtung nach einem der Ansprüche 1 bis 3, wobei das Faserstrangende (4) mit der Trennvorrichtung (3) an den neu zu bewickelnden zweiten Formträger (2') führbar ist, so dass das Faserstrangende (4) den zweiten Formträger berührt.

5. Vorrichtung nach einem der Ansprüche 1 bis 4, wobei die Trennvorrichtung (3) eine zweite Anstreifeinrichtung aufweist, mit der das Faserstrangende (4) nach dem Lösen aus der Trennvorrichtung (3) an dem zu bewickelnden zweiten Formträger (2') anstreifbar ist.

6. Vorrichtung nach einem der Ansprüche 1 bis 5, wobei der Fadenspeicher (13) zumindest zwei Umlenkrollen (14, 15) für den Faserstrang (1) aufweist und wobei durch Vergrößerung des Abstandes zwischen den beiden Umlenkrollen (14, 15) ein zur Abstandsvergrößerung Δa proportionaler Faserstrangabschnitt (18) zwischenspeicherbar ist.

7. Verfahren zum Aufwickeln zumindest einer Faser, insbesondere eines Faserstranges (1) auf einen Formträger (2),
wobei der Faserstrang (1) mit einem Harz imprägniert wird und wobei der imprägnierte Faserstrang (1) auf einem rotierend angetriebenen ersten Formträger (2) aufgewickelt wird,
wobei im Zuge der Beendigung des Wickelvorganges eine Trennvorrichtung (3) in den Wickelbereich eingeschwenkt und der Faserstrang (1) an dem ersten Formträger (2) festgehalten wird und durchtrennt wird,
wobei während des Festhaltens des Faserstranges (1) ein Faserstrangabschnitt (18) des kontinuierlich zugeführten Faserstranges (1) in einem Fadenspeicher (13) zwischengespeichert wird,
wobei das festgehaltene Faserstrangende (4) zum Anwickeln an den neu zu bewickelnden rotierend angetriebenen zweiten Formträger (2') gelöst wird,
wobei daraufhin der zwischengespeicherte Faserstrangabschnitt (18) unter einer ersten geringeren Fadenspannung an den zweiten Formträger (2') angewickelt wird und
wobei anschließend der kontinuierlich zugeführte Faserstrang (1) unter einer zweiten höheren Fadenspannung an dem zweiten Formträger (2') aufgewickelt wird und so weiter fort.

8. Verfahren nach Anspruch 7, wobei der zweite Formträger (2') mit dem anliegenden Faserstrangende (4) zunächst entgegen der Aufwickelrichtung gedreht wird.

9. Verfahren nach Anspruch 8, wobei das Faserstrangende (4) mit Hilfe der zweiten Anstreifeinrichtung an dem zweiten Formträger (2') angestreift wird.

## Claims

1. Device for winding at least one fibre, in particular a fibre strand (1) onto a form carrier (2),
wherein a separator (3) is provided, with a cutter (6) and a clamp (8),
wherein at the end of a winding process, on a finished wound, first form carrier (2) the fibre strand (1) can be separated with the cutter (6) and fixed with a clamp (8) to the separator (3),
wherein the separator (3) is intended to guide the fibre strand end (4) fixed to the separator (3) to a second form carrier (2') to be wound, in order to start a new winding process,
wherein the separator (3) during a winding process can be swivelled out of the winding area (5) on the form carrier (2) and at the end of a winding process can be swivelled into the winding area (5), and
wherein in the feed direction before the separator (3) is arranged at least one thread store (13) for temporary storage of a fibre strand section (18) between the conclusion of one winding process and the start of a new winding process.

2. Device according to claim 1, wherein at least one impregnation system is provided to impregnate the fibre strand (1) with a resin, the impregnation system preferably being arranged before the thread store (13) in the feed direction.

3. Device according to claim 1 or 2, wherein a presser unit is provided with which the remaining end (11) of the fibre strand (1) can be pressed onto the finished wound form carrier (2).

4. Device according to any of claims 1 to 3, wherein the fibre strand end (4) with the separator (3) can be guided to the new second form carrier (2') to be wound so that the fibre strand end (4) touches the second form carrier.

5. Device according to any of claims 1 to 4, wherein the separator (3) has a second presser unit with which the fibre strand end (4), after detachment from the separator (3), can be pressed onto the second form carrier (2') to be wound.

6. Device according to any of claims 1 to 5, wherein the thread store (13) has at least two deflector rollers (14, 15) for the fibre strand (1) and wherein by enlarging the distance between the two deflector rollers (14, 15) a fibre strand section (18) proportional to the distance enlargement Δa can be temporarily stored.

7. Method for winding at least one fibre, in particular a fibre strand (1) onto a form carrier (2),
wherein the fibre strand (1) is impregnated with a resin and where the impregnated fibre strand (1) is wound onto a rotating driven first form carrier (2),
wherein during the conclusion of the winding process, a separator (3) is swivelled into the winding area and the fibre strand (1) is fixed at the first form carrier (2) and separated,
wherein during fixing of the fibre strand (1) a fibre strand section (18) of the continuously fed fibre strand (1) is temporarily stored in a thread store (13),
wherein the fixed fibre strand end (4) is detached for winding onto the rotating driven second form carrier (2') to be wound,
wherein then the temporarily stored fibre strand section (18) is wound onto the second form carrier (2') under a first lesser thread tension, and
wherein then the continuously fed fibre strand (1) is wound onto the second form carrier (2') under a second greater thread tension, and so on.

8. Method according to claim 7, where the second form carrier (2') with the fibre strand end (4) lying thereon is rotated first against the winding direction.

9. Method according to claim 8, where the fibre strand end (4) is pressed onto the second form carrier (2') by means of the second presser unit.

## Revendications

1. Dispositif d'enroulement d'au moins une fibre, en particulier d'un cordon de fibres (1) sur un support de mise en forme (2),
dans lequel il est prévu un dispositif de séparation (3) avec un dispositif de coupe (6) et un dispositif de serrage (8),
dans lequel, lors de l'achèvement d'une opération d'enroulement sur un premier support de mise en forme (2) enroulé fini, le cordon de fibres (1) peut être séparé par le dispositif de coupe (6) et être fixé par un dispositif de serrage (8) sur le dispositif de séparation (3),
dans lequel le dispositif de séparation (3) est prévu pour l'amenée de l'extrémité (4) du cordon de fibres, fixée sur le dispositif de séparation (3), sur un second support de mise en forme (2') à enrouler au début d'une nouvelle opération d'enroulement,
dans lequel le dispositif de séparation (3) peut pivoter pendant une opération d'enroulement hors de la zone d'enroulement (5) sur le support de mise en forme (2) et pivoter dans la zone d'enroulement (5) à la fin d'une opération d'enroulement, et
dans lequel au moins un stockage de fils (13) pour l'entreposage d'une section (18) de cordon de fibres entre l'achèvement d'une opération d'enroulement et le début d'une nouvelle opération d'enroulement est disposé en amont du dispositif de séparation (3) dans la direction d'amenée.

2. Dispositif suivant la revendication 1, dans lequel il est prévu au moins un dispositif d'imprégnation pour imprégner le cordon de fibres (1) avec une résine, le dispositif d'imprégnation étant disposé de préférence en amont du stockage de fils (13) dans la direction d'amenée.

3. Dispositif suivant l'une des revendications 1 et 2, dans lequel il est prévu un dispositif de raclage qui permet de racler l'extrémité résiduelle (11) du cordon de fibres (1) sur le support de mise en forme (2) enroulé fini.

4. Dispositif suivant l'une des revendications 1 à 3, dans lequel l'extrémité (4) du cordon de fibres peut être guidée par le dispositif de séparation (3) sur le second support de mise en forme (2') à enrouler, de sorte que l'extrémité (4) du cordon de fibres entre au contact du second support de mise en forme.

5. Dispositif suivant l'une des revendications 1 à 4, dans lequel le dispositif de séparation (3) comporte un second dispositif de raclage, qui permet de racler l'extrémité (4) du cordon de fibres après son détachement du dispositif de séparation (3) sur le second support de mise en forme (2') à enrouler.

6. Dispositif suivant l'une des revendications 1 à 5, dans lequel le stockage de fils (13) comporte au moins deux galets de renvoi (14, 15) pour le cordon de fibres (1) et dans lequel, par augmentation de la distance entre les deux galets de renvoi (14, 15), une section (18) de cordon de fibres proportionnelle à l'augmentation de distance Δa peut être entreposée.

7. Procédé d'enroulement d'au moins un fibre, en particulier d'un cordon de fibres (1) sur un support de mise en forme (2),
dans lequel le cordon de fibres (1) est imprégné avec une résine et le cordon de fibres (1) imprégné est enroulé sur un premier support de mise en forme (2) entraîné en rotation,
dans lequel, au cours de l'achèvement de l'opération d'enroulement, un dispositif de séparation (3) pivote dans la zone d'enroulement et le cordon de fibres (1) est maintenu sur le premier support de mise en forme (2) et coupé,
dans lequel, pendant le maintien du cordon de fibres (1), une section (18) du cordon de fibres (1) amené en continu est entreposée dans un stockage de fils (13),
dans lequel l'extrémité (4) maintenue du cordon de fibres est détachée pour l'enroulement sur le second support de mise en forme (2') à enrouler, entraîné en rotation,
dans lequel la section (18) de cordon de fibres entreposée est ensuite enroulée avec une première tension de fils relativement faible sur le second support de mise en forme (2') et
dans lequel le cordon de fibres (1) amené en continu est ensuite enroulé avec une seconde tension de fils relativement élevée sur le second support de mise en forme (2'), et ainsi de suite.

8. Procédé suivant la revendication 7, dans lequel le second support de mise en forme (2'), avec l'extrémité appliquée (4) du cordon de fibres, est d' abord tourné dans le sens contraire à la direction d'enroulement.

9. Procédé suivant la revendication 8, dans lequel l'extrémité (4) du cordon de fibres est raclée à l'aide du second dispositif de raclage sur le second support de mise en forme (2').
